# EUROPEAN PATENT APPLICATION

(11) **EP 1 890 422 A2**
(43) Date of publication of application: **20.02.2008**
(21) Application number: 07016091.6
(22) Date of filing: 16.08.2007
(51) Int. Cl.: H04L 12/00

(54) **Method and apparatus for sending state indication of voice packet by user equipment in a mobile communication system**

(30) Priority: 16.08.2006 KR 20060077361; 07.02.2007 KR 20070012949; 06.07.2007 KR 20070068285
(71) Applicant: Samsung Electronics Co., Ltd., Yeongtong-gu Suwon-si, Gyeonggi-do (KR)
(72) Inventor: Kim, Soeng-Hun, Yeongtong-gu Suwon-si Gyeonggi-do (KR); Jeong, Kyeong-In, Yeongtong-gu Suwon-si Gyeonggi-do (KR); Van Lieshout, Gert Jan, Yeongtong-gu Suwon-si Gyeonggi-do (KR); Van der Velde, Himke, Yeongtong-gu Suwon-si Gyeonggi-do (KR)
(74) Representative: Lang, Johannes

(57) **Abstract**

Provided is a method for receiving allocated transmission resources by a User Equipment (UE) in a mobile communication system supporting a voice packet service. The method includes determining whether there is a state transition of a desired current transmission voice packet, using at least one state transition indication generation condition determined according to a codec mode of the UE; if it is determined that the state of the current voice packet has transitioned from a state of an old voice packet, generating state transition indication of the voice packet and transmitting the state transition indication to an Evolved Node B (ENB); and receiving allocated transmission resources corresponding to the state transition indication from the ENB, and transmitting the voice packet using the allocated transmission resources.

## Description

### BACKGROUND OF THE INVENTION

### 1. Field of the Invention

The present invention relates generally to a mobile communication system, and in particular, to a method and apparatus for sending state transition indication (or state transition information) to a scheduler by a User Equipment (UE) during voice packet service.

### 2. Description of the Related Art

A Universal Mobile Telecommunication Service (UMTS) system is a 3^{rd} Generation (3G) asynchronous mobile communication system that uses Wideband Code Division Multiple Access (WCDMA) and is based on Global System for Mobile-Communications (GSM) and General Packet Radio Services (GPRS), both of which are European mobile communication systems.

Long Term Evolution (LTE), which is an evolved mobile communication system of the UMTS system in the 3^{rd} Generation Partnership Project (3GPP) in charge of UMTS standardization, is now under discussion.

LTE is a technology for implementing high-speed packet based communication at a maximum of about 100 Mbps, aiming at commercialization by around the year 2010. To this end, various schemes are under discussion. For example, the schemes under discussion include a scheme of reducing the number of nodes located in a communication path by simplifying a configuration of the network, and a scheme of maximally approximating wireless protocols to wireless channels.

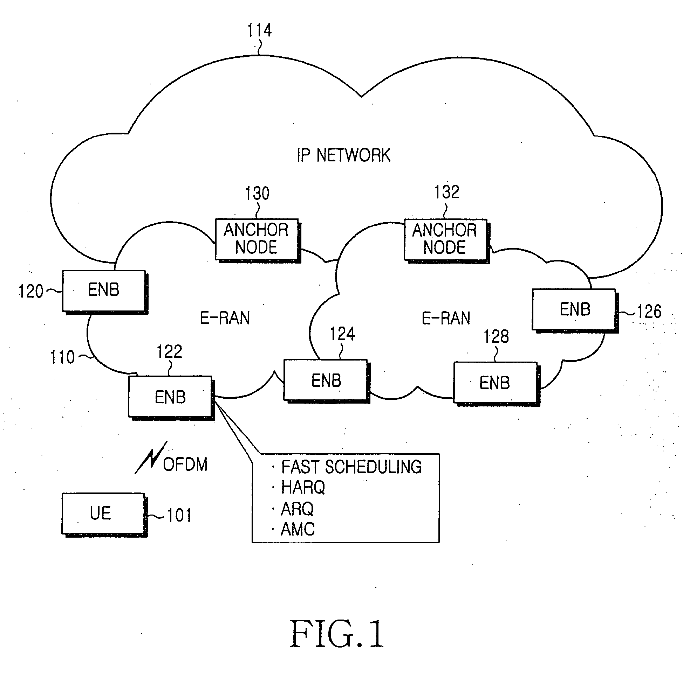

FIG. 1 is a diagram illustrating an exemplary configuration of an Evolved UMTS mobile communication system to which the present invention is applicable.

Referring to FIG. 1, an Evolved UMTS Radio Access Network (E-UTRAN) 110, as illustrated, is simplified to a 2-node configuration of Evolved Node Bs (ENBs, or Node Bs) 120, 122, 124, 126 and 128, and anchor nodes 130 and 132. A User Equipment (UE) 101 accesses the Internet Protocol (IP) network by means of the E-UTRAN 110.

The ENBs 120 to 128 correspond to Node Bs of the legacy UMTS system, and are connected to the UE 101 over wireless channels. Compared to the legacy Node Bs, the ENBs 120 to 128 perform complex functions. In LTE, there is a need for an apparatus for collecting status information of UEs and performing scheduling depending thereon to support a service in which all user packets are transmitted over a shared channel, including real-time services such as Voice over IP (VoIP) that transmits voice packets over the Internet Protocol. The ENBs 120 to 128 are in charge of the scheduling.

Throughout the specification, "shared channel" refers to a channel having the same function as that of a High Speed Packet Data Shared Channel (HS-PDSCH) of High Speed Downlink Packet Access (HSDPA), or an Enhanced-Dedicated Physical Data Channel (E-DPDCH) of Enhanced uplink Dedicated Channel (E-DCH), over each of which user packets are transmitted.

Like the mobile communication system supporting the HSDPA/E-DCH service, the LTE system also performs a Hybrid Automatic Repeat reQuest (HARQ) technique between the ENBs 120 to 128 and the UE 101.

The HARQ technique is a technology of soft-combining retransmitted data with previously received data without discarding the previously received data, thereby increasing a reception success rate. More specifically, a receiving HARQ entity determines a presence/absence of an error in a received packet, and then sends an HARQ positive ACKnowledgement (HARQ ACK) signal or an HARQ Negative ACKnowledgement (HARQ NACK) signal to a transmitting entity according to the presence/absence of an error. The transmitting entity performs retransmission of the HARQ packet or transmission of a new HARQ packet according to the HARQ ACK/NACK signal. The receiving HARQ entity soft-combines the retransmitted packet with the previously received packet, thereby reducing an error occurrence rate.

However, because various Quality of Service (QoS) requirements cannot be satisfied with only the HARQ, Outer-Automatic Repeat reQuest (ARQ) can be performed in an upper layer, and the Outer-ARQ can also be performed between the UE 101 and the ENBs 120 to 128. To implement a data rate of a maximum of 100 Mbps, the LTE system is expected to use Orthogonal Frequency Division Multiplexing (OFDM) as a wireless access technology in a 20-MHz bandwidth. In addition, the LTE system will apply an Adaptive Modulation & Coding (AMC) scheme of adaptively determining a modulation scheme and a channel coding rate according to a channel state of the UE.

A brief description will now be made of a mobile communication system employing ENB scheduling, to which the present invention is applicable. Transmission/reception of uplink packets particularly in the system employing ENB scheduling undergoes the following process.

An ENB collects information necessary for scheduling, such as buffer state, channel condition, etc. from UEs, and a scheduler of the ENB allocates uplink transmission resources to the UEs depending on the information necessary for scheduling, and then signals the allocated-transmission resource information to the UEs.

In this context, the OFDM-based communication system to which the present invention is applicable uses a particular frequency band for a particular period as transmission resources, and the ENB signals the transmission resource information using a predetermined channel. For convenience, the channel over which a control message containing transmission resource information is transmitted will be referred to herein as a 'grant channel'. Upon receipt of transmission resource information signaled over the grant channel, the UE transmits packets in the uplink direction using the received transmission resource information.

As described above, in a system employing ENB scheduling, to transmit one packet in the uplink direction, the UE reports buffer state/channel state to the ENB scheduler, and receives allocated transmission resources from the ENB. These processes are accompanied with separate control information transmission/reception.

These processes, even though they are desirable in terms of the efficient use of wireless resources, are unsuitable for services such as VoIP in which small packets occur continuously, because signaling overhead due to the separate control information transmission/reception may happen continuously.

In other words, the newly proposed LTE mobile communication system needs a detailed, efficient transmission resource allocation scheme for supporting the real-time services such as VoIP. In addition, there is a need for a detailed processing process for the continuously generated small packets, and for an efficient transmission resource allocation scenario for transmission resources therefor.

### SUMMARY OF THE INVENTION

An aspect of the present invention is to address at least the above problems and/or disadvantages and to provide at least the advantages described below. Accordingly, an aspect of the present invention is to provide a method and apparatus for sending state transition indication (or state transition information) by a UE during a voice packet service in a mobile communication system.

Another aspect of the present invention is to provide a method and apparatus for determining, by a UE, a state of a voice packet and reporting information indicating the determined state to a scheduler in a mobile communication system supporting a voice packet service.

According to one aspect of the present invention, there is provided a method for receiving allocated transmission resources by a User Equipment (UE) in a mobile communication system supporting a voice packet service. The method includes determining whether there is a state transition of a desired current transmission voice packet, using at least one state transition indication generation condition determined according to a codec mode of the UE; generating a state transition indication of the voice packet and if it is determined that the state of the current voice packet has transitioned from a state of an old voice packet, transmitting the state transition indication to an Evolved Node B (ENB); and receiving allocated transmission resources corresponding to the state transition indication from the ENB, and transmitting the voice packet using the allocated transmission resources.

According to another aspect of the present invention, there is provided a User Equipment (UE) apparatus for supporting a voice packet service in a mobile communication system. The UE apparatus includes a controller for determining whether there is a state transition of a desired current transmission voice packet, using at least one state transition indication generation condition determined according to a codec mode of the UE; a state transition indication generator for generating a state transition indication of the voice packet and transmitting the state transition indication to an Evolved Node B (ENB), under control of the controller; and a grant channel processor for transmitting a voice packet in a transmission buffer over transmission resources allocated from the ENB according to the state transition indication.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating an exemplary configuration of an Evolved UMTS mobile communication system to which the present invention is applicable;
FIG. 2 is a diagram illustrating a characteristic of VoIP packets according to the present invention;
FIG. 3 is a schematic diagram illustrating a process of generating information related to a state of a packet by a UE according to the present invention;
FIG. 4 is a signaling diagram between a UE and an ENB for transmitting/receiving a state transition indication according to the present invention;
FIG. 5 is a diagram illustrating the concept of a state transition indication generation condition defined according to the present invention;
FIGs. 6A to 6C are diagrams illustrating a definition of a message format for a state transition indication according to the present invention;
FIG. 7 is a diagram illustrating an operation of a UE for transmitting a state transition indication according to a first embodiment of the present invention;
FIG. 8 is a diagram illustrating an operation of a UE according to a second embodiment of the present invention;
FIG. 9 is a diagram illustrating an operation of a UE according to a third embodiment of the present invention;
FIG. 10 is a diagram illustrating a transmission format with which a UE transmits a state transition indication along with a VoIP packet according to the present invention;
FIG. 11 is a diagram illustrating an operation of a UE according to a fourth embodiment of the present invention;
FIG. 12 is a diagram illustrating an operation of a UE according to a fifth embodiment of the present invention;
FIG. 13 is a diagram illustrating an operation of a UE according to a sixth embodiment of the present invention; and
FIG. 14 is a diagram illustrating a structure of a UE apparatus for transmitting a state transition indication according to the present invention.

### DETAILED DESCRIPTION OF THE PREFERRED EMBODIMENTS

Preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

Although the present invention will be described with reference to the LTE system, by way of example, the present invention can be applied to all mobile communication systems employing ENB scheduling without any modification.

In the LTE system supporting a real-time voice packet service, to which the present invention is applicable, it can be noted that VoIP generally generates packets with a relatively uniform size every 20 msec. Accordingly, the present invention provides a scheme capable of servicing VoIP without the buffer state reporting and explicit transmission resource allocation processes used in existing mobile communication systems, with use of the foregoing characteristic.

In other words, a preferred embodiment of the present invention provides a method and apparatus in which a UE signals, to an ENB, the information based on which generation period and size of packets can be estimated, instead of reporting the size and generation period of the packets to the ENB every time a new packet is generated, during the service such as VoIP in which the size and generation period of uplink packets are known, thereby efficiently using uplink transmission resources limited in the wireless link.

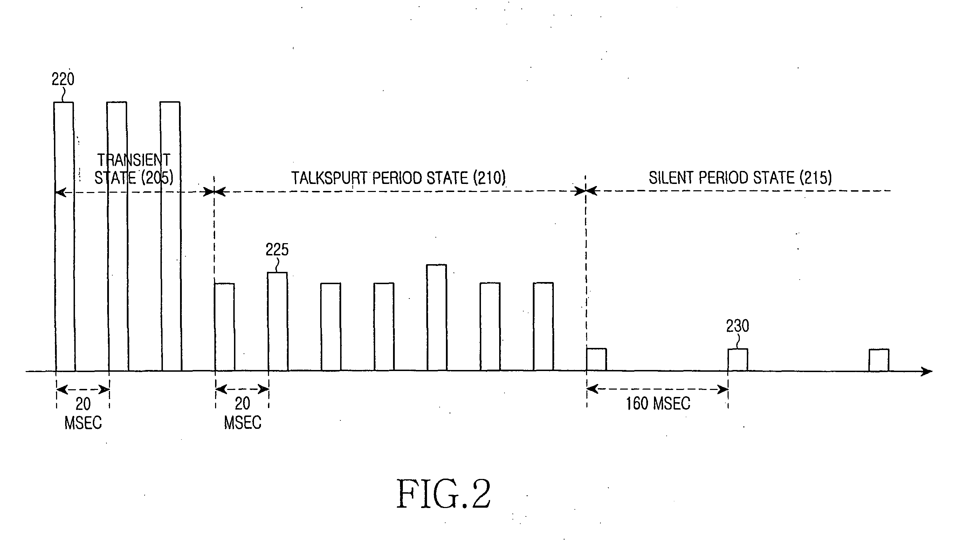

FIG. 2 is a diagram illustrating a characteristic of VoIP packets according to the present invention.

The terms 'VoIP packet' and 'VoIP traffic' as used herein have the same meaning. While the term 'VoIP packet' is defined to stress the meaning of the generated voice packet, the term 'VoIP traffic' is defined to stress the meaning of the continuously transmitted VoIP packet. It would be clear to those skilled in the art that a series of the VoIP packets is identical to the VoIP traffic.

Referring to FIG. 2, the UMTS-based mobile communication system according to the present invention includes using an Adaptive Multi Rate (AMR) codec as the mobile communication system supports the VoIP traffic. Further, in the mobile communication system, header compression is essential to reduce the overhead caused by a header. Therefore, the mobile communication system supporting the VoIP service according to the present invention is characterized in that the mobile communication system uses the AMR codec and transmits/receives the VoIP traffic to which header compression is applied.

In the present invention, a header compressor can transmit first several packets without compressing their headers. The period in which packets are transmitted with their headers uncompressed is referred to herein as a 'transient state' 205. In the transient state, relatively large-size packets having a size of about 800 bits are generated.

The header compressor, if the transient state expires, starts to compress headers of VoIP packets. When the state in which a user actually generates voice data is defined as 'talkspurt period state' 210, a size of the packet generated in the talkspurt period state 210 is about 300 bits (see 225). A size of the compressed header slightly differs according to a change in a field value of the header. The compressed header generally has a 24-bit size, and sometimes has a larger size. The transient state 205 and the talkspurt period state 210 both has a packet generation period of 20 msec.

In a silent period state 215 where the user generates no voice data, a packet 230 having a size of about 100 bits is generated. A packet generation period of the silent period state is 160 msec.

In summation, in VoIP, size and packet generation period of a packet vary according to a current state, but in the same state, the packet generation period is constant and a size of the generated packet is almost constant.

For example, in the talkspurt period state 210, each packet generation period is constant to 20 msec, but a packet is generated whose size is greater than the packet in the silent period state, having a size of about 300 bits.

Taking the characteristics of the VoIP traffic into account, the present invention provides the following operations of a UE and an ENB.
(1) The UE, during call establishment, receives from the ENB the information based on which the UE can detect state transition of the VoIP traffic.
(2) The UE detect state transition of the VoIP traffic based on the information, and signals the detected state transition to the ENB, without performing separate buffer state reporting.
(3) The ENB estimates the packet generated state of the UE according to the current state of the UE, signaled from the UE, and allocates appropriate transmission resources according thereto.

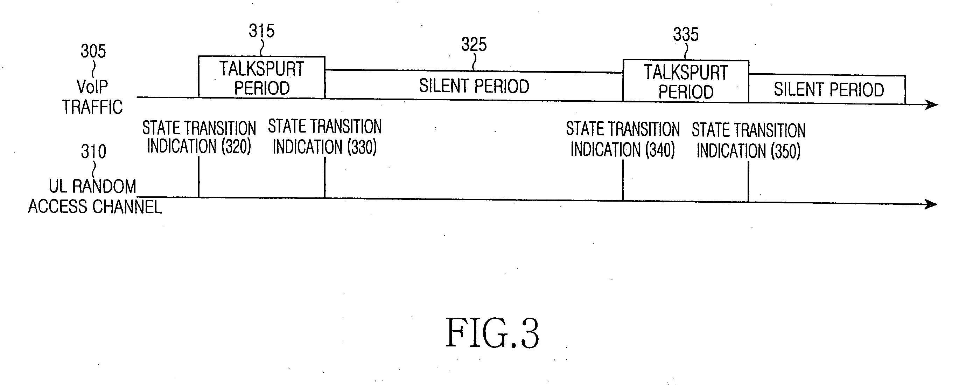

FIG. 3 is a schematic diagram illustrating a process of generating information (or indication) related to a state of a packet by a UE according to the present invention.

Referring to FIG. 3, in an upper layer of a UE, a packet having a size of about 300 bits is generated every 20 msec in talkspurt period states 315 and 335, and a packet having a size of about 100 bits is generated every 160 msec in a silent period state 325.

Based on the foregoing predetermined criterion, the UE determines to which state a packet generated at an arbitrary time belongs. If it is determined that there is a transition in the state of the generated packet, the UE sends, to the ENB, indication information indicating the transition in the state of the packet, i.e. state transition indications 320, 330, 340 and 350 according to the present invention.

As for an uplink channel for transmitting the state transition indication (or state transition information), a dedicated channel allocated to the UE can be used, or a shared channel shared by multiple UEs can be used. In the present invention, it is assumed that a random access channel is used as the shared channel.

Accordingly, in the present invention, the ENB receives a state transition indication transmitted from the UE, and allocates transmission resources according to the transitioned state.

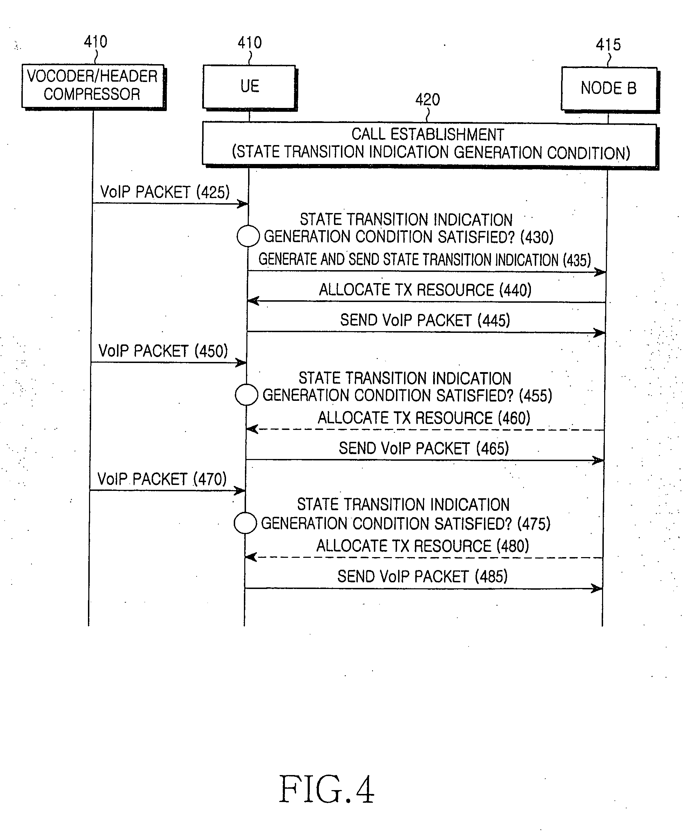

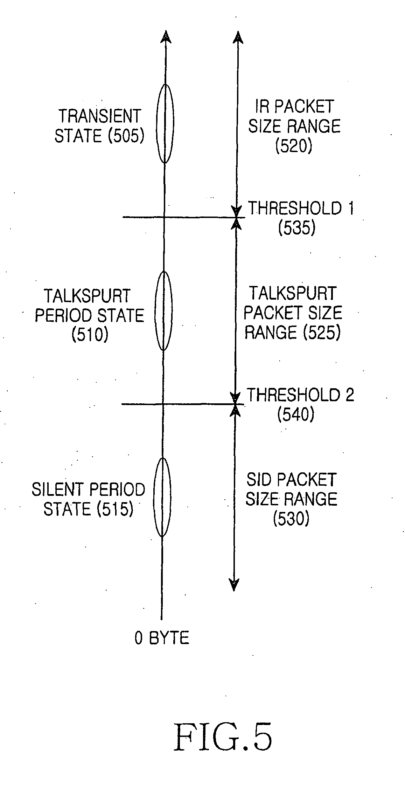

FIG. 4 is a signaling diagram between a UE and an ENB for transmitting/receiving a state transition indication according to the present invention. FIG. 5 is a diagram illustrating the concept of a state transition indication generation condition defined according to the present invention.

Referring to FIGs. 4 and 5, an ENB (or Node B) 415 acquires a call-related parameter during call establishment. The call-related parameter can be delivered from, for example, an anchor node of the ENB. The call-related parameter may include such information as an AMR codec mode supporting a VoIP call. The ENB can derive, from the VoIP codec mode, a size of the packet to be generated individually for each VoIP state.

As described above, the VoIP packet is composed of an IP/UDP/RTP header and a payload, i.e., a voice frame generated from a codec is composed of a VoIP packet through an Internet Protocol (IP)/User Datagram Protocol (UDP)/Real-time Transport Protocol (RTP) entity.

As to a size of the IP/UDP/RTP header, the full Internet Protocol version 6 (IPv6) header has a 60-byte size, and the compressed header has a size of about 3 ~ 15 bytes. A size of the payload is defined as a constant size per codec mode. Therefore, a size of the VoIP packet has a value, or size, of a constant scope according to the codec mode.
Table 1 shows sizes of VoIP packets according to codec mode.

**Table 1**

| AMR codec mode | Payload size (in bytes) | Full size (for full header in bytes) | Full size (for compressed header in bytes) |
|---|---|---|---|
| AMR 4.75 kbit/s | 14 | 79 | 17 ~ 29 |
| AMR 5.15 kbit/s | 15 | 80 | 18 ~ 30 |
| AMR 5.90 kbit/s | 16 | 81 | 19 ~ 31 |
| AMR 6.70 kbit/s (PDC-EFR) | 18 | 83 | 21 ~ 33 |
| AMR 7.40 kbit/s (TDMA-EFR) | 20 | 85 | 23 ~ 35 |
| AMR 7.95 kbit/s | 22 | 87 | 25 ~ 37 |
| AMR 10.2 kbit/s | 27 | 92 | 30 ~ 42 |
| AMR 12.2 kbit/s (GSM-EFR) | 32 | 97 | 35 ~ 47 |
| AMR SID | 7 | 72 | 10 ~ 22 |

In Table 1, AMR Silence Insertion Descriptor (SID) means a packet generated in a silent period, and the other codec modes mean packets generated in a talkspurt period.

In this manner, the ENB can derive a size of the packet to be generated individually for each state from the VoIP codec modes..

For example, if an AMR 12.2-kbps codec mode is used for an arbitrary VoIP call, it can be expected that a packet with a 97-byte size generates in a transient state of the call, a packet with a (35 - 47)-byte size generates in a talkspurt period state, and a packet with a (10 - 22)-byte size generates in a silent period state.

Therefore, the ENB determines a state transition indication generation condition based on the VoIP codec mode, and signals the state transition indication condition to the UE 410 in step 420.

The 'state transition indication generation condition' can be a generation period of a size of a packet generated in an upper layer of the UE, or of a packet generated in the upper layer. In the case where a size of the packet generated in the upper layer is used as the state transition indication generation condition, because a size of the packet that occurs in an arbitrary state has a constant scope individually for each codec mode as shown in Table 1, the UE can estimate a state to which the corresponding packet belongs, based on the size of the packet generated in the upper layer.

Referring to FIG. 5, the ENB determines a threshold #1 (or reference size #1) 535 taking into account a size 520 of a packet to be generated in a transient state and a size 525 of a packet to be generated in a talkspurt period state, and defines a threshold #2 (or reference size #2) 540 taking into account a size 525 of a packet generated in the talkspurt period state and a size 530 of a packet generated in a silent period state.

In other words, if a size of the packet generated for the UE is greater than the threshold #1, the ENB determines that the generated packet is in the transient state. If the size of the generated packet is between the threshold #1 and the threshold #2, the ENB defines that the generated packet is in the talkspurt period state. In addition, if the size of the generated packet is less than the threshold #2, the ENB can issue a command to determine that the generated packet is in the silent period state.

For example, in the AMR 7.95-kbps codec mode, a packet with an 87-byte size can generate in the transient state, a packet with a (25 - 37) byte-size can generate in the talkspurt period state, and a packet with a (10 - 22) byte-size can generate in the silent period state.

Therefore, the threshold #1 can be defined as an arbitrary value 50 between 87 and 37, and the threshold #2 can be defined as an arbitrary value 23 between 22 and 25.

After determining an appropriate state transition indication generation condition according to the VoIP codec mode in this manner, the ENB signals the state transition indication generation condition to the UE in step 420.

If a VoIP packet arrives at the UE from a vocoder 410 in step 425, i.e. if the UE detects generation of desired transmission voice data in a transmission buffer, the UE determines in step 430 whether the VoIP packet satisfies the state transition indication generation condition.

The UE determines a current state of the desired transmission VoIP traffic depending on the defined thresholds (threshold #1 and threshold #2) of the packet, received from the ENB. In addition, the UE determines whether the current state of the VoIP traffic is equal to an old (or previous) state.

If the current state of the VoIP traffic is not the same as to the old state, the UE, determining that the VoIP packet satisfies the state transition indication generation condition, generates a state transition indication according thereto and sends the state transition indication to the ENB in step 435. The state transition indication is used for reporting a new state to the ENB and requesting the ENB to allocate transmission resources suitable to the new state based on the new state of the UE. With the state transition indication, a new control message can also be defined. The state transition indication can also be transmitted using a normal buffer state report message.

For the VoIP packet first generated after the call is established in step 420, because there is no old state, the state transition indication generation condition is considered always satisfied.

Therefore, in step 435, the UE should send the state transition indication to the ENB. In step 440, the ENB determines which transmission resources having which size the ENB should allocate to the UE at which period depending on the state transition indication, and allocates the transmission resources to the UE over a grant channel. In step 445, the UE transmits the VoIP packet using the allocated transmission resources.

Thereafter, if a second VoIP packet arrives at the UE in step 450, the UE determines a state of the packet, compares the state of the current packet with a state of the old packet, and determines whether to generate a state transition indication in step 455.

For example, if even the second packet is a packet with a full header, i.e. if the current state is the transient state and the old state is also the transient state, there is no need to re-allocate transmission resources because there is no transition in the state. Therefore, the UE generates no state transition indication.

Therefore, in step 460, the ENB allocates transmission resources to the UE based on the state transition indication last received in step 435.

If the UE was allocated persistent transmission resources from the ENB in step 440, the ENB does not send transmission resource allocation information in step 460. The persistent transmission resources, once allocated, are continuously available until they are released by a separate signaling, so the persistent transmission resources can be usefully used for the service such as VoIP in which packets generate periodically.

The persistent transmission resources are advantageous in that they should not necessarily undergo separate signaling for the same information between the ENB and the UE, thereby reducing overhead for a signaling process in the wireless link and saving the limited transmission resources, and the saved transmission resources can be used for other services, thereby providing an efficient transmission resource allocation scheme.

To the contrary, if no persistent transmission resource was allocated in step 440, the ENB transmits transmission resource allocation information in step 460.

Thereafter, every time a VoIP packet generated in the upper layer arrives, the UE determines whether the packet satisfies the state transition indication generation condition, and generates and sends the state transition indication to the ENB if the packet satisfies the state transition indication generation condition.

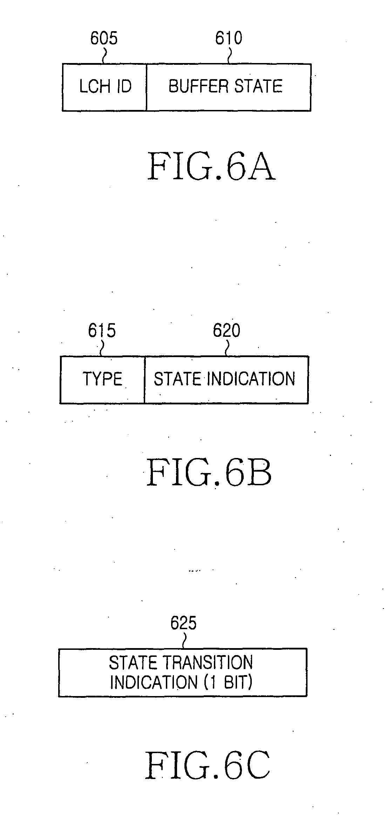

FIGs. 6A to 6C are diagrams illustrating a definition of a message format for a state transition indication according to the present invention.

Referring to FIG. 6A, a UE can generate a buffer state report by including an identifier of a logical channel associated with VoIP in a Logical CHannel IDentifier (LCH_ID) field 605 in a message for sending state transition indication, and including a size of a packet satisfying a state transition indication generation condition in a buffer state field 610, and send the generated message to the ENB.

If the buffer state report 610 of the received message is a buffer state report for the VoIP logical channel, the ENB considers that the buffer state does not reflect all of the data stored in the corresponding buffer, but has a size of a VoIP packet, which indicates a state of the VoIP traffic. Additionally, the ENB derives a new state of the VoIP traffic from the size of the VoIP packet, and allocates appropriate transmission resources according to the state.

Referring to FIG. 6B, if the UE uses a new control message containing an actually transitioned state as the state transition indication, the new control message includes a type indication field 615 indicating a type of the type indication, and a new state indication field 620 of the UE.

For example, the state indication can be defined as a Null state, a transient state, a talkspurt period state, and a silent period state, using predetermined bits. In addition, the UE can set a particular state in the new state indication field 620 using the above-defined bit value, and send the state indication to the ENB.

Referring to FIG. 6C, the UE can use a 1-bit indicator as the state transition indication 625. In this case, if the 1-bit indicator is set to '1', a state of the VoIP traffic has transitioned from the old state.

### First Embodiment

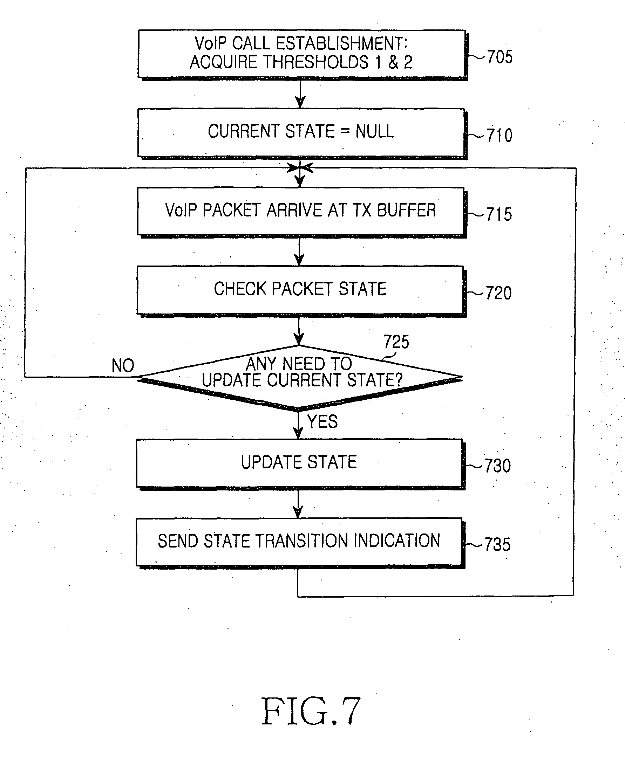

FIG. 7 is a diagram illustrating an operation of a UE for transmitting a state transition indication according to a first embodiment of the present invention.

Referring to FIG. 7, in step 705, a UE performs a call establishment process for supporting a VoIP service with an ENB (VoIP Bearer Establishment).

In the call establishment process, the UE acquires a threshold #1 and a threshold #2 defined according to a VoIP packet size, signaled from the ENB (Acquisition of Thresholds 1 and 2). As for the threshold #1 and the threshold #2, the UE can use predetermined values, instead of receiving threshold values in every call establishment process.

In step 710, the UE is operating in an initial state, i.e., the UE sets a state variable 'Current State' to the Null state, and waits until a VoIP packet arrives from an upper layer. The state variable 'Current State' used according to a VoIP service of the UE is a variable for managing the current state of the VoIP traffic, and the UE can have one of 4 values, which are the Null state, a transient state, a talkspurt period state, and a silent period state.

If the UE receives, in step 715, a VoIP packet delivered from the upper layer, i.e. if the UE detects presence of a VoIP packet in a transmission buffer (VoIP Packet Arrival at Transmission Buffer), the UE compares in step 720 a size of the VoIP packet with the threshold #1 and the threshold #2 to determine the size of the VoIP packet (Evaluate Current State).

If the size of the VoIP packet is greater than the threshold #1, the UE sets the state variable 'Current State' to the transient state.

If the size of the VoIP packet is less than the threshold #1 and greater than the threshold #2, the UE sets the state variable 'Current State' to the talkspurt period state. If the size of the VoIP packet is less than the threshold #2, the UE sets the state variable 'Current State' to the silent period state.

If the UE determines in step 725 that there is no need to update the state variable 'Current State' as the current state of the VoIP packet is equal to the state stored in the state variable 'Current State', the UE returns to step 715 and waits until the next packet arrives, i.e., because the current state of the VoIP packet delivered to the transmission buffer is equal to the old state, the UE transmits the received VoIP packet in the uplink direction over the previously allocated transmission resources without separate buffer state reporting.

However, if it is determined that the current state of the VoIP packet is different from the sate stored in the state variable 'Current State', the UE proceeds to step 730.

In step 730, the UE updates the state variable 'Current State' with a new state. In step 735, the UE generates a state transition indication corresponding to the new state value and transmits the state transition indication to the ENB, and then returns to step 715. The state transition indication can include therein, for example, an identifier of a logical channel associated with the VoIP service, and information related to a size of the packet that has caused generation of the state transition indication.

The foregoing description of the first embodiment of the present invention has been made for the case where the UE uses the shared transmission resources like the random access channel, other than the dedicated transmission resources, to transmit the state transition indication. Here, there is a possibility that the transmission of the state transition indication will interrupt transmission of an important message of another UE. Because this possibility cannot be excluded, it is preferable that the UE sends the state transition indication as a small number of times as possible.

If there is a transition to the state in which transmission resources required for VoIP packet transmission of the UE is reduced, i.e. if there is a transition to the state in which a size of the generated VoIP packet is reduced, the ENB can derive from the size of the received packet the fact that the state of the VoIP packet has been transitioned. Therefore, the ENB can operate even though the UE has transmitted no state transition indication. However, the transmission resources allocated for transmission of a larger-size packet are used for transmission of the first packet generated in the state where a size of the generated VoIP packet is reduced, causing a waste of the transmission resources. However, the waste of the transmission resources is limited only to the first packet, so the waste cannot be considered as a serious problem.

In this context, a second embodiment defines an operation of a UE as a scheme of solving this problem.

### Second Embodiment

The second embodiment of the present invention provides a method of transmitting state transition indication only when there is a transition to the state in which more transmission resources are required, and a method of omitting transmission of the state transition indication when there is a transition to the state in which the required transmission resources are reduced.

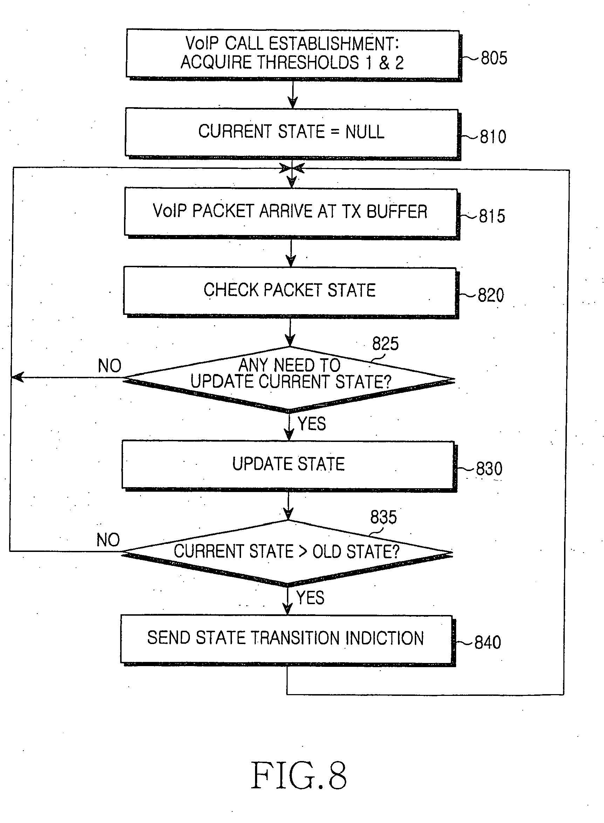

FIG. 8 is a diagram illustrating an operation of a UE according to the second embodiment of the present invention.

Referring to FIG. 8, in step 805, a UE performs a call establishment process for supporting a VoIP service with an ENB (VoIP Bearer Establishment).

Here, the UE receives from the ENB a threshold #1 and a threshold #2, which are defined as different references according to a size of a VoIP packet on the basis of a mode of an AMR codec used (Acquisition of Thresholds 1 and 2). As for the threshold #1 and the threshold #2, the UE can use predetermined values, instead of receiving threshold values through signaling during call establishment. This means that the UE can predict the threshold #1 and the threshold #2 based on the AMR codec mode used.

In step 810, the UE, operating in an initial state, sets a state variable 'Current State' to the Null state and waits until a packet arrives from an upper layer. The state variable 'Current State' is a variable for managing the current state of the VoIP traffic, and the UE can have one of 4 values, which are the Null state, a transient state, a talkspurt period state, and a silent period state.

If a VoIP packet arrives from the upper layer in step 815, the UE compares in step 820 a size of the VoIP packet with the threshold #1 and the threshold #2 to determine a state of the VoIP packet. If the size of the packet is greater than the defined threshold #1, it indicates the transient state. If the size of the packet is less than the threshold #1 and greater than threshold #2, the size indicates the talkspurt period state. If the size of the packet is less than the threshold #2, the size indicates the silent period state. If it is determined in step 825 that the state of the current packet is equal to the state stored in the state variable 'Current State', the UE returns to step 815 and waits until the next packet arrives.

However, if the state of the current packet is different from the state stored in the state variable 'Current State', the UE proceeds to step 830.

In step 830, the UE updates the state variable 'Current State' with a new state. In step 835, the UE determines whether the newly updated state requires more transmission resources than the old state. The newly updated state requires more transmission resources than the old state in the following three cases.
1. There is a transition from the silent period state to the talkspurt period state.
2. There is a transition from the silent period state to the transient state.
3. There is a transition from the talkspurt period state to the transient state.

If any one of the foregoing cases happens, i.e. if the newly updated state requires more transmission resources than the old state, the UE proceeds to step 840. However, if the newly updated state does not require more transmission resources than the old state, the UE returns to step 815, i.e., according to the second embodiment, if the newly updated state requires less transmission resources than the old state, the UE does not report state transition to the ENB.

In step 840, as more transmission resources are required, the UE generates a state transition indication and sends the state transition indication to the ENB, and then returns to step 815. The state transition indication can include therein, for example, an identifier of a logical channel associated with the VoIP service, and size information of the packet that has caused generation of the state transition indication.

### Third Embodiment

The third embodiment of the present invention provides a method of transmitting a state transition indication over a separate control channel when there is a transition to the state in which more transmission resources are required, and of transmitting the state transition indication along with a VoIP packet when there is a transition to the state in which the required transmission resources are reduced.

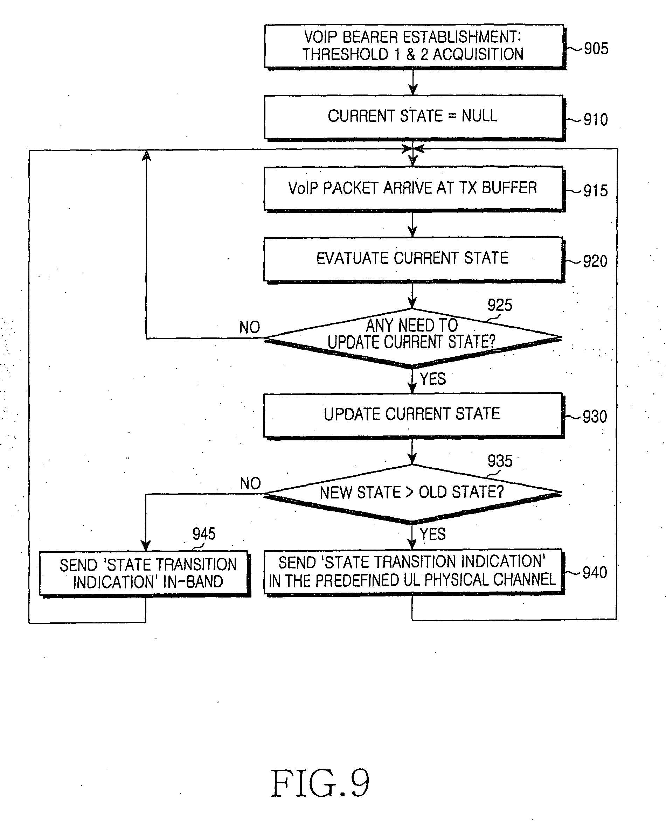

FIG. 9 is a diagram illustrating an operation of a UE according to the third embodiment of the present invention.

Referring to FIG. 9, in step 905, a UE performs a VoIP call establishment process with an ENB (VoIP Bearer Establishment).

In this process, the UE acquires a threshold #1 and a threshold #2, notified from the ENB, defined as different references according to a size of a VoIP packet on the basis of a mode of AMR codec used (Acquisition of Thresholds 1 and 2). As for the threshold #1 and the threshold #2, the UE can use predetermined values, instead of receiving predetermined values through signaling during call establishment. This means that the UE can predict the threshold #1 and the threshold #2 based on the AMR codec mode used.

In step 910, the UE, operating in an initial state, sets a state variable 'Current State' to the Null state and waits until a packet arrives from an upper layer. The state variable 'Current State' is a variable for managing the current state of the VoIP traffic, and the UE can have one of 4 values, which are the Null state, a transient state, a talkspurt period state, and a silent period state.

If a VoIP packet arrives from the upper layer in step 915, the UE determines in step 920 a state of the current VoIP traffic depending on a comparison between the size of the arrived VoIP packet, and the threshold #1 and the threshold #2.

For example, if the size of the packet is greater than the defined threshold #1, the size indicates the transient state. If the size of the packet is less than the threshold #1 and greater than threshold #2, the size indicates the talkspurt period state. If the size of the packet is less than the threshold #2, the size indicates the silent period state.

If it is determined in step 925 that the state of the current packet is equal to the state stored in the state variable 'Current State', the UE returns to step 915 and waits until the next packet arrives. However, if the state of the current packet is different from the state stored in the state variable 'Current State', the UE proceeds to step 930.

In step 930, the UE updates the state variable 'Current State' with a new state. In step 935, the UE determines whether the newly updated state requires more transmission resources than the old state. The newly updated state requires more transmission resources than the old state in the following three cases.
1. There is a transition from the silent period state to the talkspurt period state.
2. There is a transition from the silent period state to the transient state.
3. There is a transition from the talkspurt period state to the transient state.

If any one of the foregoing cases happens, i.e. if the newly updated state requires more transmission resources than the old state in step 935, the UE proceeds to step 940. However, if the newly updated state requires less transmission resources than the old state, the UE proceeds to step 945.

In step 940, as more transmission resources are required, the UE generates a state transition indication and sends the state transition indication to the ENB over a predefined uplink channel, for example, a dedicated channel or random access channel allocated to the UE, and then returns to step 915.

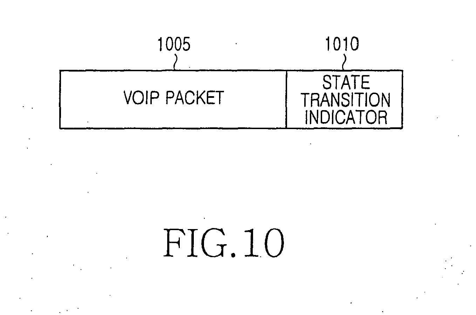

However, in step 945, as the newly updated state requires less transmission resources than the old state, the UE generates a state transition indication and sends the state transition indication to the ENB along with a packet containing a VoIP packet generated in the new state as shown in FIG. 10.

FIG. 10 is a diagram illustrating a transmission format with which a UE transmits the state transition indication along with a VoIP packet according to the present invention.

Referring to FIG. 10, a UE can attach the state transition indication 1010 to a VoIP packet 1005 and transmit the state transition indication 1010 and the VoIP packet over transmission resources allocated from an ENB. The UE can use a 1-bit indicator for the state transition indication. In this case, if the 1-bit indicator is set to '1', the state of the VoIP traffic has transitioned from the old state.

### Fourth Embodiment

The fourth embodiment of the present invention provides a scheme of allowing a UE to release persistent transmission resources allocated for a corresponding state after transmitting state transition indication.

The term 'persistently allocated transmission resources' refers to transmission resources previously allocated so that the UE can use the resources at a predetermined time without undergoing a separate transmission resource allocation process, when a packet, having a similar size to that of the VoIP packet, generates periodically. The persistent transmission resources can be allocated through an upper layer message such as Radio Resource Control (RRC) layer message or Media Access Control (MAC) layer message, or can be allocated through a normal scheduling channel. For example, in the case where particular transmission resources (or a set of transmission resources) are allocated to the UE every 20 msec for VoIP packet transmission in the talkspurt period state, if the UE transitions from the talkspurt period state to the silent period state, there is no need to release the transmission resources.

The normal procedure for allocating or releasing persistent transmission resources is explicitly achieved by transmitting a physical channel signal over a predetermined downlink control signal, for example, a scheduling channel (also known as L1/L2 control channel), or by using an upper layer message.

According to the characteristic of a VoIP session, it is obvious to both the UE and the ENB that if a VoIP state transitions, the persistent transmission resources used in the old state are released and new persistent transmission resources need not to be allocated. Because the UE transmits the state transition indication to the ENB, the fourth embodiment of the present invention provides that if the state transition indication is successfully transmitted by the UE, both the UE and the ENB implicitly agree to release the persistent transmission resources used in the old state.

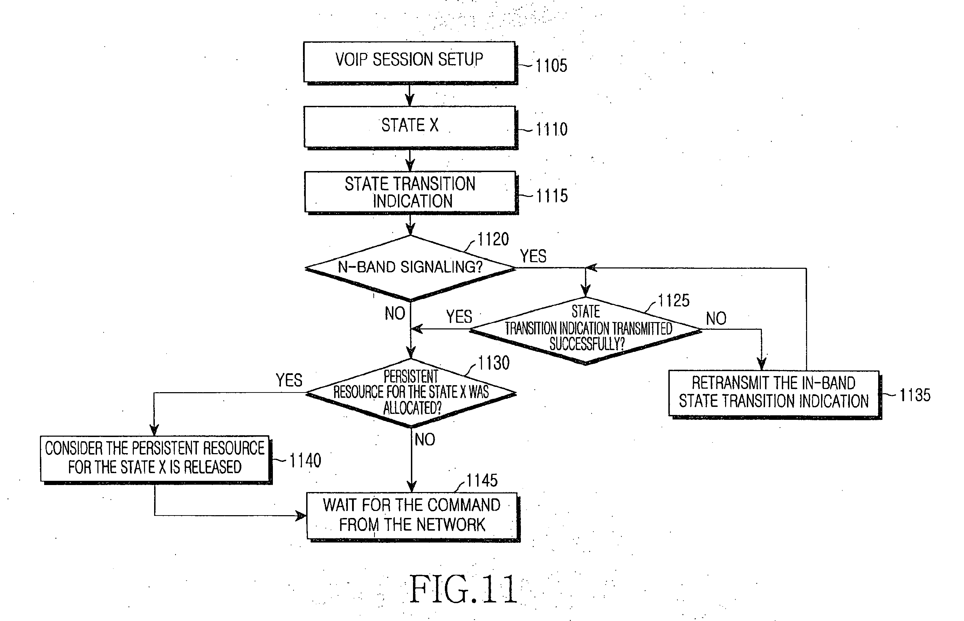

FIG. 11 is a diagram illustrating an operation of a UE according to the fourth embodiment of the present invention.

Referring to FIG. 11, in step 1105, a UE sets up a VoIP session, and monitors generation of a VoIP packet in a transmission buffer, to determine whether there is a state transition.

In step 1110, the UE detects occurrence of a state transition to a new state x. The state x can be one of the talkspurt period state and the silent period state.

In step 1115, the UE generates a state transition indication because of the state transition. If the state transition has occurred to a state that requires more transmission resources than the current state, the UE transmits the state transition indication over a predefined uplink physical channel. However, if the state transition has happened to the state that requires less transmission resources, the UE transmits the packet over previously allocated transmission resources as done in the third embodiment. In this case, the UE can transmit the state transition indication along with the packet, or can transmit a small-size packet over the previously allocated transmission resources as done in the second embodiment, thereby implicitly indicating the state transition. The small-size packet can be, for example, an SID.

In step 1120, the UE determines whether the state transition indication transmitted in step 1115 was transmitted over a predetermined uplink physical channel or transmitted in a VoIP packet, or if the UE operates in the second embodiment, the UE determines whether the state transition is indicated as a smaller-size VoIP packet is transmitted.

If the state transition indication was transmitted over a predetermined uplink physical channel, the UE proceeds to step 1130, and if the state transition indication was implicitly indicated as a small-size VoIP packet is transmitted, or if the state transition indication was transmitted together with the VoIP packet, the UE proceeds to step 1125.

In step 1125, the UE determines whether a MAC Protocol Data Unit (PDU) containing state transition indication or containing a small-size VoIP packet indicating state transition was successfully transmitted.

In the LTE system, because every MAC PDU undergoes a HARQ process during its transmission/reception, if the UE fails to receive a HARQ ACK until the current number of retransmissions reaches a predetermined maximum number of retransmissions, the UE determines that the MAC PDU has not been successfully transmitted. However, if the UE has received a HARQ ACK, the UE determines that the MAC PDU has been successfully transmitted.

Therefore, if it is determined that the MAC PDU has not been successfully transmitted, the UE proceeds to step 1135 where the UE retransmits the state transition indication. In this case, if there are persistent transmission resources allocated for the state x, the UE retransmits the state transition indication using the persistent transmission resources. Alternatively, the UE can retransmit a small-size VoIP packet implicitly indicating the state transition, thereby avoiding the normal transmission resource allocation request process.

However, if the MAC PDU has been successfully transmitted, the UE determines in step 1130 whether there are persistent transmission resources allocated for the state x. If it is determined in step 1130 that there are persistent transmission resources allocated for the state x, the UE proceeds to step 1140 where the UE releases the persistent transmission resources for the state x. For example, the UE no longer uses the persistent transmission resources, considering that the persistent transmission resources for the state x are no longer available.

Thereafter, the UE proceeds to step 1145 where the UE waits for the next command, for example, a new persistent transmission resource allocation command, from the ENB or the network.

However, it is determined in step 1130 that there is no persistent transmission resource allocated for the state x, the UE directly proceeds to step 1145 where the UE waits for the next command from the ENB or the network. The fourth embodiment of the present invention, if transmission of the state transition indication is completed, considers the determination as an implicit indication indicating a released state of the persistent transmission resources allocated for the old state, instead of signaling separate persistent transmission resource release indication, thereby saving transmission resources used for the signaling of the persistent transmission resource release indication. The present invention can be applied even to the downlink, i.e., if a state of a downlink session transitions from the talkspurt period state to the silent period state, the ENB can transmit an SID packet using the downlink persistent transmission resources allocated for the talkspurt period state, thereby implicitly indicating the released state of the downlink persistent transmission resources for the talkspurt period state.

### Fifth Embodiment

The fifth embodiment of the present invention provides a method of estimating state transition based on a size of a packet whose header is uncompressed.

An indication most explicitly indicating a transition in the state is a size of a packet whose header is uncompressed. For example, in a 12.2-kbps codec mode, a packet with a 97-byte size generates in the talkspurt period state, and a packet with a 72-byte size generates in the silent period state. As shown in Table 1, a size of a packet with an uncompressed header means a transition in the state or a change in the codec mode. However, the change in the codec mode in the talkspurt period state or the transition from the talkspurt period state to the silent period state can be estimated depending on the size of the transmission/reception packet, and a scheduler does not need to transmit separate state transition indication because the scheduler allocates resources for transmitting a packet every 20 msec. However, when there is a transition from the silent period state to the talkspurt period state, the scheduler should rapidly transmit a separate state transition indication. Since the scheduler allocates transmission resources to a UE in the silent period state every 160 msec, if the UE reports a state transition by transmitting a size-changed packet, an excessive delay may occur.

In the fifth embodiment of the present invention, the UE monitors a change in the size of the packet with an uncompressed header, and transmits a state transition indication upon detecting a transition from the silent period state to the talkspurt period state through the monitoring, i.e., when the size of the packet with an uncompressed header changes from a threshold #1 corresponding to a size of an SID to another arbitrary value, the UE transmits the state transition indication because a transition from the silent period state to the talkspurt period state has happened. In all other cases, even though there is a change in the size of the packet with an uncompressed header, the UE transmits no state transition indication.

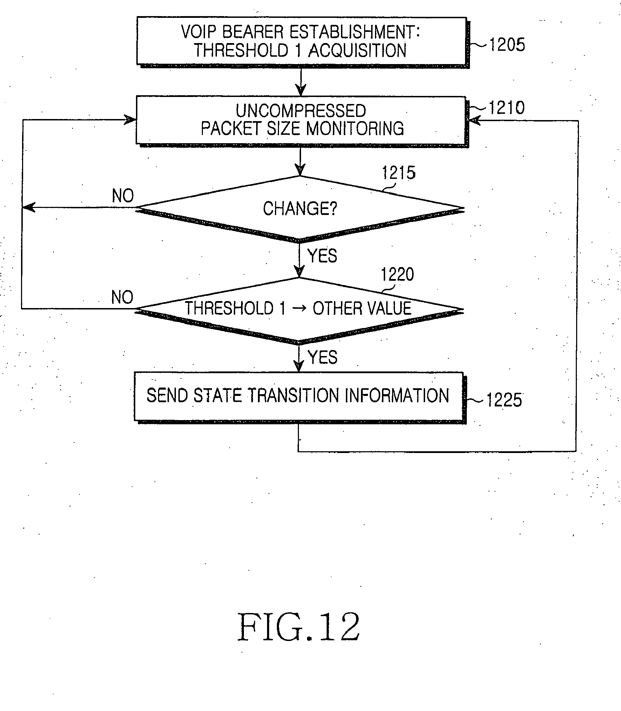

FIG. 12 is a diagram illustrating an operation of a UE according to the fifth embodiment of the present invention.

In step 1205, a UE performs a VoIP call establishment process with an ENB (VoIP Bearer Establishment).

In this process, the UE acquires a threshold #1 indicative of a size of an SID packet with an uncompressed header, notified from the ENB. If the size of the packet with an uncompressed header changes from the threshold #1 to another arbitrary size, the UE transmits state indication, recognizing that there is a transition from the silent period state to the talkspurt period state.

In step 1210, the UE monitors a size of a packet generated through the VoIP bearer, with its header uncompressed. The header compression is performed in a so-called Packet Data Convergence Protocol (PDCP) apparatus, and the size of the packet with an uncompressed header means a size of a packet being input to the PDCP apparatus.

Upon detecting a change in the size of the packet with an uncompressed header in step 1215, the UE determines in step 1220 whether the size of the packet with an uncompressed header has changed from the threshold #1 to another arbitrary value. If it is determined in step 1220 that there is a change to another arbitrary value, indicating a transition from the silent period state to the talkspurt period state, the UE transmits the state transition indication in step 1225. The state transition indication, as described above, can have a format of a normal buffer state report message shown in FIGs. 6A to 6C, can have a format of a separate control message, or can be implemented with 1-bit indication. For example, if the state transition indication is a normal buffer state report message, the UE performs a normal procedure for sending a buffer state report in step 1225, i.e., the UE sends a request for transmission resource allocation for transmission of a buffer state report message to the scheduler, and then sends the buffer state report message using transmission resources allocated in response to the request. Upon receipt of the buffer state report message, the ENB recognizes state transition of the UE based on the information contained in the buffer state report message, and takes an appropriate action depending thereon. If the state transition indication is composed of a 1-bit indication as shown in FIG. 6C, and dedicated transmission resources are previously allocated for transmission of the 1-bit indication, the UE transmits the state transition indication using the previously allocated dedicated transmission resources.

After completing the transmission of the state transition indication, the UE returns to step 1210 and monitors the size of the packet with an uncompressed header.

If it is determined in step 1220 that the size of the packet with an uncompressed header has not changed from the threshold #1 to another arbitrary value, for example, if the old size of the packet with an uncompressed header is not the threshold #1, the UE returns to step 1210 without taking a separate action, and monitors the size of the packet with an uncompressed header.

### Sixth Embodiment

In the sixth embodiment of the present invention, a UE monitors a size of a packet with an uncompressed header, and spontaneously releases the persistent transmission resources allocated for the talkspurt period state if there is a state transition from the talkspurt period state to the silent period state.

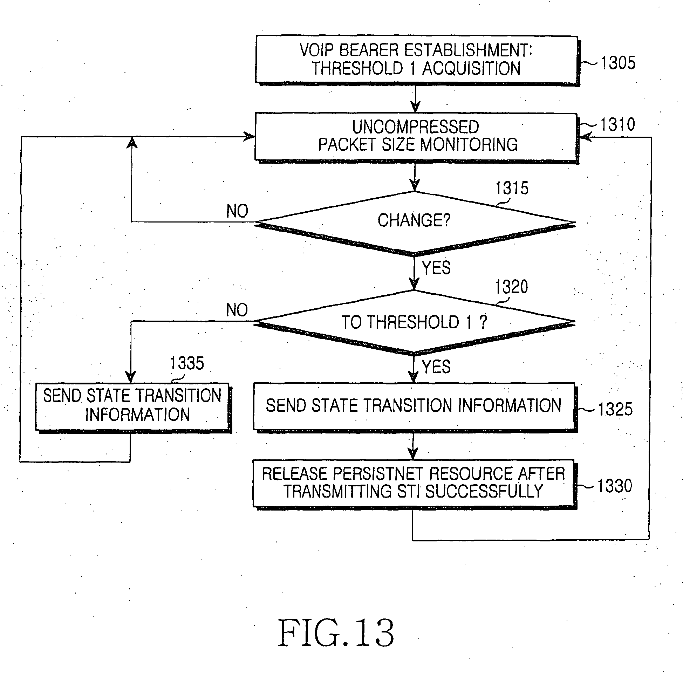

FIG. 13 is a diagram illustrating an operation of a UE according to a sixth embodiment of the present invention.

In step 1305, a UE performs a VoIP call establishment process with an ENB (VoIP Bearer Establishment).

In this process, the UE acquires a threshold #1 indicative of a size of an SID packet with an uncompressed header, notified from the ENB. If the size of the packet with an uncompressed header is identical to the threshold #1, the UE recognizes the transition from the talkspurt period state to the silent period state, and takes a necessary action of, for example, spontaneously releasing the persistent transmission resources.

In step 1310, the UE monitors a size of a packet generated through the VoIP bearer, with its header uncompressed. The header compression is performed in a so-called PDCP apparatus, and the size of the packet with an uncompressed header means a size of a packet being input to the PDCP apparatus.

Upon detecting a change in the size of the packet with an uncompressed header in step 1315, the UE determines in step 1320 whether the newly changed size of the packet with an uncompressed header is identical to the threshold #1. If the size is identical to the threshold #1, the UE proceeds to step 1325. Otherwise, if the size is not identical to the threshold #1, the UE proceeds to step 1335.

Because proceeding to step 1325 results from a transition from the talkspurt period state to the silent period state, the UE sends a state transition indication in step 1325, and releases the persistent transmission resources allocated for the talkspurt period state in step 1330. The state transition indication can be either explicit information or implicit information. When the state transition indication is the explicit information, the message shown in FIGs. 6A to 6C can be used. When the size of the transmitted packet indicates state transition, the UE can replace the transmission of the state transition indication with transmission of a packet with a size suggesting the state transition, instead of a separate transmission of the explicit information.

After successfully transmitting the state transition indication indicating the transition to the silent period state, for example, after successfully transmitting the explicit information shown in FIGs. 6A to 6C or successfully transmitting a packet with an uncompressed header, a size of which is identical to the threshold #1, the UE spontaneously releases the persistent transmission resources associated with the talkspurt period state, considering that the state has transitioned to the silent period state. Thereafter, the UE returns to step 1310 and monitors the size of the header-uncompressed packet.

Because proceeding to step 1335 results from a transition from the silent period state to the talkspurt period state, the UE sends the state transition indication according a predetermined method in step 1335, and then returns to step 1310 where the UE monitors the size of the header-uncompressed packet. In this case, the state transition indication can follow the format shown in FIG. 6A or 6B. Alternatively, the UE can contain size information of the uncompressed packet in the state transition indication, thereby assisting the scheduler in recognizing the newly transitioned state.

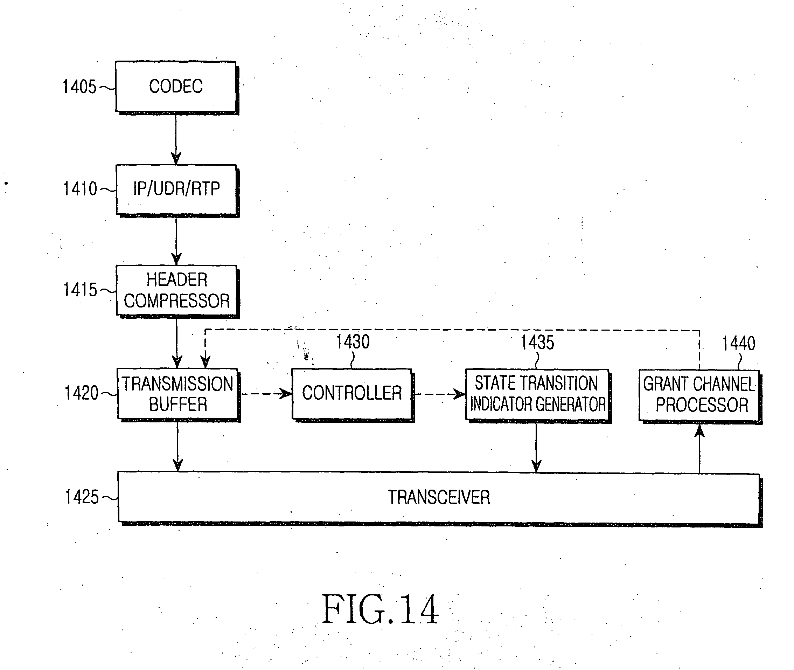

FIG. 14 is a diagram illustrating a structure of a UE apparatus for transmitting a state transition indication according to the present invention.

Referring to FIG. 14, a UE includes a codec 1405 for generating voice data, an IP/UDP/RTP protocol entity 1410 for making a VoIP packet with the voice data generated by the codec 1405, a header compressor 1415 for compressing a header of the VoIP packet, a transmission buffer 1420 for storing a packet until its transmission, a transceiver 1425 for transmitting packets over a wireless channel and receiving necessary control information, a grant channel processor 1440 for receiving transmission resource allocation information over a grant channel, a state transition indication generator 1435, and a controller 1430.

The controller 1430 receives a state transition indication generation condition, i.e. a threshold #1 and a threshold #2, from an upper layer, and compares a size of the VoIP packet stored in the transmission buffer 1420 with the threshold #1 and threshold #2 to determine whether the state transition indication generation condition is satisfied.

If the state transition indication generation condition is satisfied, the controller 1430 commands the state transition indication generator 1435 to generate state transition indication.

The state transition indication generator 1435, under the control of the controller 1430, generates a state transition indication and transmits the state transition indication to an ENB over a predetermined uplink channel such as an uplink shared channel.

The grant channel processor 1440 receives transmission resource allocation information from the ENB, and controls the transmission buffer 1420 to transmit the packet if there are allocated transmission resources. Therefore, the transceiver 1425 transmits a VoIP packet received at the transmission buffer 1420 using the allocated transmission resources.

As is apparent from the foregoing description, according to the present invention, the UE transmits a state transition indication to the ENB using a size of the desired transmission VoIP packet and thresholds defined according to a mode of a codec used for supporting the VoIP service, thereby simplifying inter-system signaling for VoIP packet transmission. The simplified signaling facilitates an efficient use of the limited transmission resources.

Additionally, the UE reports the existing buffer state by transmitting only the state transition indication, thereby contributing to a reduction in the amount of transmission resources required for the buffer state reporting.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for receiving allocated transmission resources by a User Equipment (UE) in a mobile communication system supporting a voice packet service, the method comprising:
determining whether there is a state transition of a desired current transmission voice packet, using at least one state transition indication generation condition determined according to a codec mode of the UE;
generating a state transition indication of the voice packet and if it is determined that the state of the current voice packet has transitioned from a state of an old voice packet, transmitting the state transition indication to an Evolved Node B (ENB); and
receiving allocated transmission resources corresponding to the state transition indication from the ENB, and transmitting the voice packet using the allocated transmission resources.

2. The method of claim 1, wherein the state transition indication is transmitted to the ENB over a dedicated channel allocated to the UE or a random access channel indicative of a shared channel shared by multiple UEs.

3. The method of claim 1, wherein the state transition indication generation condition includes at least one of a size and a generation period of a packet, which vary according to the codec mode acquired from the ENB by the UE.

4. The method of claim 3, wherein the determining of whether there is a state transition of a desired current transmission voice packet comprises:
determining a state of a desired current transmission voice packet using at least one threshold received from the ENB; and
comparing the determined state of the voice packet with a state of an old voice packet to determine whether they are different from each other.

5. The method of claim 4, wherein the determining of a state of a desired current transmission voice packet comprises:
when the threshold includes a first threshold and a second threshold, if a size of a packet generated for the UE is greater than the first threshold, determining the state as a transient state ;
if the size of the generated packet is between the first threshold and the second threshold, determining the state as a talkspurt period state; and
if the size of the generated packet is less than the second threshold, determining the state as a silent period state.

6. The method of claim 1, wherein the transmitting of the state transition indication to an ENB comprises:
including information indicating the determined state of the voice packet in a state indication field of a control message before transmission.

7. The method of claim 1, wherein the transmitting of the state transition indication to an ENB comprises:
including the determined size of the voice packet in a buffer state field of a logical channel before transmission.

8. The method of claim 6, wherein the state transition indication of the voice packet further comprises a type indication of the control message.

9. The method of claim 7, wherein the state transition indication of the voice packet further comprises identifier information of the logical channel.

10. The method of claim 1, wherein the transmitting of the state transition indication to an ENB comprises:
when the determined state of the current voice packet requires more transmission resources than a state of the old voice packet, transmitting the state transition indication of the voice packet to the ENB.

11. The method of claim 1, wherein the transmitting of the state transition indication to an ENB comprises:
when the state of the current voice packet transitions from the silent period state to a transient state with a full header of a 20-msec period, or when the state of the current voice packet transitions from a talkspurt period state to the transient state, transmitting the state transition indication of the voice packet to the ENB, when the state of the current voice packet transitions from a silent period state of a 160-msec period to the talkspurt period state with a compressed header of a 20-msec period.

12. The method of claim 1, further comprising:
when the determined state of the current voice packet is identical to the state of the old voice packet, transmitting the current voice packet to the ENB over a same resource as that of the old voice packet.

13. The method of claim 10, further comprising:
generating state transition indication and transmitting it along with a packet containing a voice packet generated in a new state, as a newly updated state requires less transmission resources than the old state.

14. The method of claim 1, further comprising:
when persistent transmission resources are allocated for the state of the old voice packet, releasing the persistent transmission resources for the state of the old voice packet when persistent transmission resources are allocated for the state of the old voice packet.

15. The method of claim 1, wherein the transmitting of the state transition indication to an ENB comprises:
when the state transition indication is implicitly indicated as it is contained in a voice packet or a small-size voice packet is transmitted determining whether the state transition indication has been successfully transmitted; and
if it is determined that the state transition indication has not been successfully transmitted, retransmitting the state transition indication.

16. The method of claim 1, further comprising:
determining whether there are more transmission resources for the current voice packet than transmission resources for the old voice packet; and
if there are more transmission resources for the current voice packet than transmission resources for the old voice packet, transmitting the state transition indication of the voice packet to a scheduler over an uplink control channel.

17. The method of claim 1, further comprising:
determining whether there are more transmission resources for the current voice packet than transmission resources for the old voice packet; and
if there are not more transmission resources for the current voice packet than transmission resources for the old voice packet, transmitting the state transition indication of the voice packet to a scheduler along with the current voice packet.

18. The method of claim 1, further comprising:
receiving from a scheduler a response signal to the current voice packet including the state transition indication of the voice packet; and
retransmitting the state transition indication of the voice packet to the scheduler in response to the response signal.

19. The method of claim 18, further comprising:
determining whether persistent transmission resources are allocated from the scheduler for the voice packet; and
releasing the persistent transmission resources.

20. A User Equipment (UE) apparatus for supporting a voice packet service in a mobile communication system, the UE apparatus comprising:
a controller for determining whether there is a state transition of a desired current transmission voice packet, using at least one state transition indication generation condition determined according to a codec mode of the UE;
a state transition indication generator for generating a state transition indication of the voice packet and transmitting the state transition indication to an Evolved Node B (ENB), under control of the controller; and
a grant channel processor for transmitting a voice packet in a transmission buffer over transmission resources allocated from the ENB according to the state transition indication.

21. The UE apparatus of claim 20, further comprising:
a codec for generating voice data;
an Internet Protocol entity for generating a voice packet using the voice data generated by the codec; and
a header compressor for generating a voice packet of a different state by compressing a header of the generated voice packet under control of the controller.

22. The UE apparatus of claim 20, wherein the controller receives from a scheduler at least one threshold that has a different generation period and is defined as having a different packet size according to the codec mode, and compares the threshold with the desired transmission voice packet to determine a particular state.

23. The UE apparatus of claim 22, wherein the controller determines the particular state as one of a null state having a different generation period and a different packet size, a transient state including a full header, a talkspurt period state, and a silent period state.

24. The UE apparatus of claim 20, wherein the controller controls the state transition indication generator to transmit the state transition indication of the voice packet by including it in a state indication field of a control message.

25. The UE apparatus of claim 20, wherein the controller controls the state transition indication generator to transmit the state transition indication of the voice packet by including it in a buffer state field of a logical channel.

26. The UE apparatus of claim 25, wherein the controller determines whether the determined state of the current voice packet is identical to an old state, and then updates the state.

27. The UE apparatus of claim 24, wherein the controller controls the state transition indication generator to include state transition indication of the voice packet in the state indication field of the control message and to further include type indication of the control message before transmission.

28. The UE apparatus of claim 25, wherein the controller controls the state transition indication generator to include state transition indication of the voice packet in the buffer state field of the logical channel and to further include identifier information of the logical channel before transmission.

29. The UE apparatus of claim 26, wherein the controller controls to transmit updated state transition indication of the voice packet to the ENB, when the state of the current voice packet transitions from a silent period state to a talkspurt period state with a compressed header of a 20-msec period, when the state of the current voice packet transitions from the silent period state to a transient state with a full header of a 20-msec period, or when the state of the current voice packet transitions from the talkspurt period state to the transient state.
